# EUROPÄISCHE PATENTSCHRIFT

(11) **EP 4 096 956 B1**
(45) Veröffentlichungstag und Bekanntmachung des Hinweises auf die Patenterteilung: **12.06.2024**
(21) Anmeldenummer: 20838509.6
(22) Anmeldetag: 21.12.2020
(51) Int. Cl.: B60K 35/00, B60R 11/02, B60R 11/00

(54) **ANZEIGEVORRICHTUNG, KRAFTFAHRZEUG MIT EINER ANZEIGEVORRICHTUNG, UND VERFAHREN ZUM BETREIBEN EINER ANZEIGEVORRICHTUNG**
DISPLAY DEVICE, MOTOR VEHICLE HAVING A DISPLAY DEVICE, AND METHOD FOR OPERATING A DISPLAY DEVICE
DISPOSITIF D'AFFICHAGE, VÉHICULE À MOTEUR AYANT UN DISPOSITIF D'AFFICHAGE ET PROCÉDÉ DE FONCTIONNEMENT D'UN DISPOSITIF D'AFFICHAGE

(30) Priorität: 27.01.2020 DE 102020101877
(43) Veröffentlichungstag der Anmeldung: 07.12.2022
(73) Patentinhaber: Audi AG, 85045 Ingolstadt (DE)
(72) Erfinder: WALL, Christian, 85122 Hitzhofen (DE); HERTER, Michael, 85072 Eichstätt (DE)
(74) Vertreter: Hofstetter, Schurack & Partner
(86) Internationale Anmeldenummer: PCT/EP2020/087419
(87) Internationale Veröffentlichungsnummer: WO 2021/151593

(56) Entgegenhaltungen:
- WO-A1-2009/095992
- WO-A1-2019/107909
- DE-B3-102016 221 254
- US-A1- 2018 260 001
- US-A1- 2020 020 255

## Beschreibung

Die Erfindung betrifft eine Anzeigevorrichtung, also ein Gerät, eine Gerätekomponente oder eine Gerätegruppe, das/die zum Anzeigen von Anzeigeinhalten ausgestaltet ist. Die Anzeigevorrichtung umfasst ein flexibles Anzeigeflächenelement mit einer Anzeigefläche zum Anzeigen des Anzeigeinhalts. Die Erfindung betrifft auch ein Kraftfahrzeug mit einer solchen Anzeigevorrichtung.

Displays finden immer mehr Einzug in Fahrzeuge und werden zu designerischen Elementen. Es besteht der Wunsch, möglichst große Displays darzustellen und diese in der Größe abhängig von einem Anwendungsfall, zum Beispiel bei einer manuellen oder pilotierten Fahrt, variieren zu können. Weiterhin gibt es den Wunsch, Displays in einer attraktiven Art zu inszenieren.

Vor allem der Bauraum, aber auch zum Beispiel Gesetze, beschränken die mögliche Größe und Position festverbauter, starrer Displays.

Die DE 101 15 050 A1 beschreibt eine Anzeigevorrichtung, insbesondere für Fahrzeuge, die einen flachen Bildschirm sowie Positionierungsmittel umfasst, mit welchen der flache Bildschirm in eine gewünschte Betrachtungsposition bewegbar ist.

Die DE 41 28 663 A1 beschreibt eine Armaturentafel, die zur Anzeige von Informationen einen Bildschirm und zum Abrufen dieser Informationen sowie zur Eingabe von Daten ein Tastenfeld aufweist.

Aus der EP 1 637 387 A1 ist eine Anzeigevorrichtung für ein Fahrzeug bekannt, die ein Display zur Darstellung von Daten von Applikationen für einen Fahrzeugnutzer umfasst, und Schwenkmittel zum Verrücken des Displays zwischen wenigstens zwei Positionen.

Aus der DE 10 2016 221 254 B3 ist eine Verstellvorrichtung für ein aufrollbares Display bekannt.

Die US 2018/0260001 A1 beschreibt ein biegsames Display, dass in einem Kraftfahrzeug zum Anzeigen von Anzeigeinhalten verwendet werden kann. Das Display ist derart biegsam, dass es in zwei parallele Ebenen gebogen werden kann und so eine Tiefeninformation des Anzeigeinhaltes darstellen kann.

Die US 2020/0020255 A1 beschreibt eine Vorrichtung mit einem flexiblen Display, wobei die Vorrichtung das Bereitstellen unterschiedlich großer Anzeigebereiche ermöglicht.

Die WO 2019/107909 A1 beschreibt ein ein- und ausziehbares Display.

Die WO 2009/095992 A1 beschreibt ebenfalls ein größenverstellbares Display, das mittels seitlich angeordneter Arme aufgespannt werden kann, um eine vergrößerte Anzeigefläche bereitzustellen.

Die Höhe der Anzeigeflächen der Anzeigegeräte aus dem Stand der Technik wird durch Ausfahren oder Abrollen der Anzeigeflächen verändert.

Eine der Erfindung zugrunde liegende Aufgabe ist das Erhöhen einer Dynam ik bei der Größenänderung einer Anzeigefläche.

Die Erfindung basiert auf der Idee, ein Anzeigeflächenelement, also zum Beispiel ein Display, nicht nur in einer Richtung auszufahren und damit nur dessen Höhe zu vergrößern, sondern die Anzeigefläche auch in einer zweiten Richtung, nämlich in der Breite, zu vergrößern. Dafür kommt ein flexibles Anzeigeflächenelement zum Einsatz, zum Beispiel ein flexibles Display wie zum Beispiel ein flexibler OLED-Bildschirm. Die Flexibilität des Displays wird dabei für die Verbreiterung des Displays genutzt. Eine erste Kinematik fährt das Anzeigeflächenelement, zum Beispiel die gesamte Displayeinheit, aus und stellt somit die Anzeigehöhe ein. Das Anzeigeflächenelement ist in einer Ausgangslage, also in der Lage, in der eine kleinere Anzeigefläche zur Verfügung steht wie in einer Panoramalage, nicht aufgerollt, sondern mittels einer zweiten Kinematik und einem Rückstellelement, zum Beispiel einer Feder, ein- oder aufgespannt.

Damit kann die Anzeigebreite eingestellt werden. Die gesamte Einheit bietet die Möglichkeit, die Anzeigeflächengröße und den Formfaktor frei zwischen einer minimalen und einer maximalen Größe einzustellen. Vorteilhaft ergibt sich, dass mit einer einfachen Kinematik verschiedene Größen einer Anzeigefläche dargestellt - also eingestellt - werden können. Bei Implementierung dieses Prinzips wird weniger Bauraum benötigt.

Die erfindungsgemäße Anzeigevorrichtung, vorzugsweise eine Anzeigevorrichtung für ein Kraftfahrzeug, umfasst ein flexibles Anzeigeflächenelement mit einer Anzeigefläche zum Anzeigen eines Anzeigeinhalts. Unter einem flexiblen Anzeigeflächenelement wird ein Bauteil, das als Anzeigefläche ausgestaltet ist, verstanden, welches nicht starr ist, sondern beweglich, also biegsam und/oder elastisch und/oder rollbar und/oder aufspannbar. Das Anzeigeflächenelement kann vorzugsweise als Bildschirm ausgestaltet sein, zum Beispiel als Bildschirm mit organischen Leuchtdioden ("organic light emitting diodes", "OLEDs").

Die Anzeigevorrichtung umfasst eine Verstelleinrichtung, die aufweist oder umfasst: ein in eine erste Verstellrichtung beweglich angeordnetes, als Stab ausgestaltetes Einspannelement, ein am Einspannelement angeordnetes Rückstellelement, und ein als Stab ausgestaltete Umlenkelement. Vorzugsweise kann das Einspannelement nur in die erste Verstellrichtung beweglich angeordnet sein.

Unter einer Verstelleinrichtung wird eine mechanische und/oder elektrische Bauteilgruppe verstanden, die gerichtet Bewegungen ausführen kann, und die auch als Kinematik bezeichnet werden kann. Die Verstelleinrichtung kann zum Bewegen des Einspannelements und das Umlenkelement zum Beispiel einen Seilzug, einen Bowden-Zug, eine Hydraulik, eine Führungsschiene und/oder einen Elektromotor aufweisen.

Unter einem Einspannelement wird ein Bauteil verstanden, das das Anzeigeflächenelement festhält, in das das Anzeigeflächenelement also zum Beispiel eingeklemmt oder eingespannt oder aufgeklebt werden kann; und das dazu beiträgt, dass das Anzeigeflächenelement straff gelagert wird. Das Einspannelement kann in die erste Verstellrichtung zum Beispiel verschoben oder gezogen werden.

Ein Rückstellelement ist ein Bauteil oder eine Bauteilgruppe, das/die dazu ausgestaltet ist, eine Rückstellkraft auf das Anzeigeflächenelement auszuüben, kann also zum Beispiel eine Feder, ein Faltenbalg oder ein Gummizug sein oder umfassen.

Eine erste Seitenkante des Anzeigeflächenelements ist an der Länge des Einspannelements angeordnet oder gelagert, vorzugsweise befestigt. Vorzugsweise kann die erste Seitenkante entlang der Länge des Einspannelements angeordnet sein. Eine der ersten Seitenkante gegenüberliegende zweite Seitenkante des Anzeigeflächenelements ist über das Rückstellelement mit dem Einspannelement verbunden, sodass eine Fläche des Anzeigeflächenelements gebogen ist und einen Beugungsbereich bildet. Der Beugungsbereich ist derjenige Bereich, in dem das flächige Anzeigeflächenelement umgelegt, also gebogen ist. Der Beugungsbereich wird also durch das gebogene oder faltenlos umgelegte Anzeigeflächenelement gebildet, ist also der Bereich, wo die Fläche des Anzeigeflächenelements eine Kurve bildet. Vorzugsweise ist das Anzeigeflächenelement nur einmal faltenlos umgebogen, also nicht gerollt.

Eine Länge des Umlenkelements erstreckt sich im Wesentlichen in die gleiche Richtung wie das Einspannelement, vorzugsweise in die gleiche Richtung. Seine Länge hat also die gleiche Orientierung wie das Einspannelement. Das Umlenkelement erstreckt sich innerhalb der Beugung oder "Innenkurve" des gebogenen Anzeigeflächenelements und in ist eine zweite Verstellrichtung beweglich angeordnet, sodass die Verstelleinrichtung dazu ausgelegt ist, einen Abstand zwischen dem Umlenkelement und dem Einspannelement zu ändern. Vorzugsweise verläuft die zweite Verstellrichtung senkrecht zu der ersten Verstelleinrichtung. Das Umlenkelement kann in die zweite Verstellrichtung zum Beispiel verschoben oder gezogen werden.

Das Rückstellelement übt eine Rückstellkraft auf das Anzeigeflächenelement zum Einspannelement hin aus. In der Ausgangslage, in der das Einspannelement und das Umlenkelement in einem geringeren Abstand zueinander stehen als in einer Panoramalage, ist das Anzeigeflächenelement durch das Rückstellelement ebenso gespannt wie in der Panoramalage. In beiden Lagen ist also ein Anzeigeinhalt des Anzeigeflächenelements gut sichtbar, da das Anzeigeflächenelement in beiden Lagen gespannt ist. In der Panoramalage ist die für zum Beispiel einen Insassen eines Kraftfahrzeugs sichtbare Breite jedoch größer, vorzugsweise auch die Höhe.

Es ergeben sich die oben genannten Vorteile. Das Anzeigeflächenelement wird nicht oder kaum geknickt oder gefaltet, wodurch das Material geschont wird und keine Falten bei der Anzeige der Anzeigeinhalte stören. Die für die Anzeige von Anzeigeinhalten verfügbare Fläche kann in ihrer Größe stufenlos verstellt werden.

Vorzugsweise kann die zweite Verstellrichtung senkrecht zu der ersten Verstellrichtung und/oder senkrecht zu der Erstreckung der Länge des Umlenkelements verlaufen. Neben einer Höhe kann so eine Breite der Anzeigefläche und damit ein Panoramaformat eingestellt werden. Ein solches Format ist insbesondere im Kraftfahrzeug sinnvoll, da der Platz über zum Beispiel der Schalttafel begrenzt ist, und da ein Panoramaformat für zum Beispiel Filme sehr nützlich ist.

Das flexible Anzeigeflächenelement kann nur einmal faltenlos um das Umlenkelement gebogen sein. Das Anzeigeflächenelement ist dadurch aufspannbar. Im Gegensatz zu einem aufgerollten Anzeigeflächenelement ergibt sich, dass kein Antrieb zum Auf- und Abrollen des Anzeigeflächenelements notwendig ist, dass kein Schmutz auf dem Anzeigeflächenelement mit eingerollt wird und dadurch an andere Stellen des Anzeigeflächenelements kommt, und eine Wahrscheinlichkeit, dass beim Wechsel zwischen Ausgangslage und Panoramalage Knicke entstehen, ist deutlich reduziert.

Idealerweise kann die Anzeigevorrichtung eine Steuereinrichtung umfassen, die dazu ausgelegt ist, in Abhängigkeit von einem eingestellten Gebrauchsmodus, zum Beispiel einem Gebrauchsmodus der Anzeigevorrichtung, ein Steuersignal zu erzeugen, das ein Verstellen des Einspannelements in die erste Verstellrichtung und ein Verstellen des Umlenkelements in die zweite Verstellrichtung beschreibt. Vorzugsweise kann das erzeugte Steuersignal ein gleichzeitiges Verstellen von Einspannelement und Umlenkelement beschreiben. So können Ausgangslage und Panoramalage von Anwendungsfall zu Anwendungsfall bereitgestellt werden.

Unter einer Steuereinrichtung wird ein Gerät, eine Gerätegruppe oder eine Gerätekomponente verstanden, das/die zum Empfangen und Auswerten von Signalen ausgestaltet und eingerichtet ist, sowie zum Erzeugen von Steuersignalen. Die Steuereinrichtung kann zum Beispiel als Steuerchip oder Steuergerät ausgestaltet sein.

Das erzeugte Steuersignal kann einen Wechsel zwischen einer Ausgangslage des Anzeigeflächenelements und einer Panoramalage, in der ein Abstand zwischen dem Umlenkelement und dem Einspannelement das Anzeigeflächenelement größer ist als in der Ausgangslage, beschreiben. Vorzugsweise kann der eingestellte Gebrauchsmodus, also ein aktueller oder ein von einem Benutzer ausgewählter Gebrauchsmodus, ein Fahrmodus eines Kraftfahrzeugs sein.

Die oben gestellte Aufgabe wird gelöst durch ein Kraftfahrzeug, das eine Ausführungsform der erfindungsgemäßen Anzeigevorrichtung umfasst. Es ergeben sich die oben beschriebenen Vorteile. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Vorzugsweise können Anzeigeflächenelement und Verstelleinrichtung in der Ausgangslage zumindest teilweise in einem Schacht eines Innenraumverkleidungselements angeordnet sein, also zumindest teilweise in dem Schacht versenkt sein. Das Einspannelement und das Umlenkelement können sich jeweils vertikal oder im Wesentlichen vertikal erstrecken, also im Wesentlichen entlang einer Kraftfahrzeug-Hochachse verlaufen. Bei einem Wechsel zwischen der Ausgangslage und einer Panoramalage kann die Steuereinrichtung die Verstelleinrichtung dazu veranlassen, das Einspannelement vertikal und das Umlenkelement horizontal zu bewegen.

Unter einem Innenraumverkleidungselement wird dabei ein Element der Innenraumverkleidung des Kraftfahrzeugs verstanden. Das Innenraumverkleidungselement kann vorzugsweise eine Schalttafel, eine Hutze oder ein Armaturenbrett des Kraftfahrzeugs sein.

Die oben gestellte Aufgabe wird, unter Erreichen der bereits genannten Vorteile, gelöst durch ein Verfahren zum Betreiben einer Ausführungsform der erfindungsgemäßen Anzeigevorrichtung, vorzugsweise einer Anzeigevorrichtung einer Ausführungsform des erfindungsgemäßen Kraftfahrzeugs, wobei die Steuereinrichtung:
- einen eingestellten Gebrauchsmodus feststellt, vorzugsweise einen eingestellten Gebrauchsmodus des Kraftfahrzeugs, insbesondere einen aktuellen oder vom Benutzer ausgewählten Fahrmodus; und
- in Abhängigkeit von einem eingestellten Gebrauchsmodus ein Steuersignal erzeugt, das ein Verstellen des Einspannelements in die erste Verstellrichtung und ein Verstellen des Umlenkelements in die zweite Verstellrichtung beschreibt; vorzugsweise ein gleichzeitiges Verstellen von Einspannelement und Umlenkelement.

In einer Ausführungsform des erfindungsgemäßen Verfahrens kann die Anzeigevorrichtung eine Anzeigevorrichtung eines Kraftfahrzeugs sein, wobei der eingestellte Gebrauchsmodus ein eingestellter Fahrmodus ist; vorzugsweise wobei die Steuereinrichtung in einem pilotierten Fahrmodus die Panoramalage des Anzeigeflächenelements einstellt. Je nach Fahrmodus kann die Anzeigefläche bedarfsgerecht eingestellt werden. Bei einer pilotierten Fahrt, bei der die Anzeigevorrichtung auch einen hohen Stellenwert im Entertainment einnimmt, kann so eine besonders große Fläche für zum Beispiel einen Film bereitgestellt werden. Bei einer manuellen oder teilweise automatisierten Fahrt kann eine kleinere Anzeigefläche eingestellt werden, auf der dann zum Beispiel die wichtigen Fahrtdaten angezeigt werden können und möglichst viel Sicht durch die Windschutzscheibe ermöglicht wird.

Zu der Erfindung gehört auch die Steuervorrichtung für das Kraftfahrzeug, die zum Durchführen des erfindungsgemäßen Verfahrens eingerichtet ist. Die Steuereinrichtung kann zum Beispiel als Steuerchip oder Steuergerät ausgestaltet sein. Die Steuervorrichtung weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Zu der Erfindung gehören auch Weiterbildungen des erfindungsgemäßen Kraftfahrzeugs, des erfindungsgemäßen Verfahrens, und der erfindungsgemäßen Steuereinrichtung, die Merkmale aufweisen, wie sie bereits im Zusammenhang mit den Weiterbildungen der erfindungsgemäßen Anzeigevorrichtung beschrieben worden sind. Aus diesem Grund sind die entsprechenden Weiterbildungen des erfindungsgemäßen Kraftfahrzeugs, des erfindungsgemäßen Verfahrens, und der erfindungsgemäßen Steuereinrichtung hier nicht noch einmal beschrieben.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung zu einem Ausführungsbeispiel der erfindungsgemäßen Vorrichtungen und dem erfindungsgemäßen Verfahren, wobei das Anzeigeflächenelement in der Ausgangslage ist;
- Fig. 2: eine weitere schematische Darstellung zu dem Ausführungsbeispiel, mit dem Anzeigeflächenelement in der Ausgangslage;
- Fig. 3: eine schematische Darstellung zu dem Ausführungsbeispiel in einer Aufsicht mit dem Anzeigeflächenelement in der Ausgangslage;
- Fig. 4: eine weitere schematische Darstellung zu dem Ausführungsbeispiel, mit dem Anzeigeflächenelement in der Panoramalage; und
- Fig. 5: eine weitere schematische Darstellung zu dem Ausführungsbeispiel in einer Aufsicht mit dem Anzeigeflächenelement in der Panoramalage.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

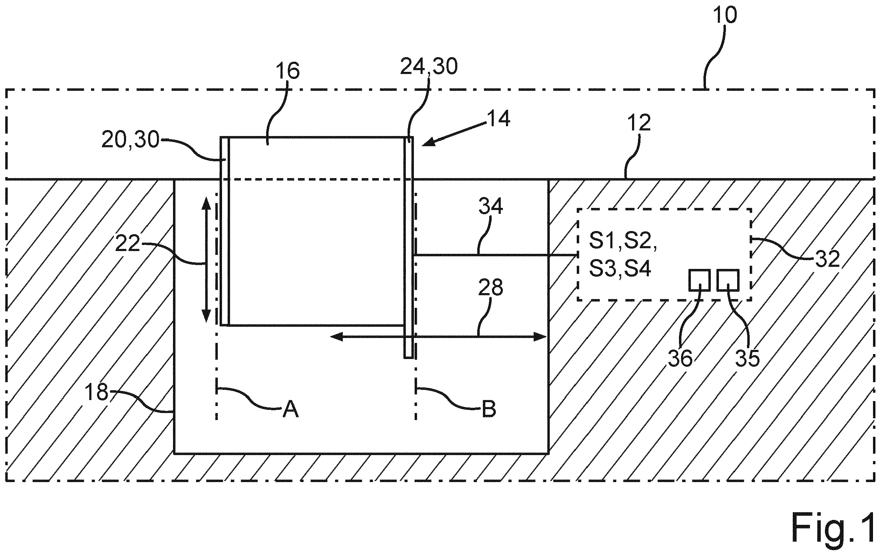

Die Fig. 1 veranschaulicht schematisch das Prinzip der erfindungsgemäßen Vorrichtungen und des erfindungsgemäßen Verfahrens anhand eines ersten Ausführungsbeispiels. Hierzu zeigt die Fig. 1 schematisch einen Bilck in ein Cockpit eines Kraftfahrzeugs 10, zum Beispiel eines Buses oder eines Personenkraftwagens.

In einer Aufsicht zeigt die Fig. 1 schematisch ein Innenraumverkleidungselement 12, das insbesondere ein Armaturenbrett oder eine Schalttafel sein kann, alternativ zum Beispiel eine Mittelkonsole oder Armlehne. Die in der Fig. 1 gezeigte Anzeigevorrichtung 14 ist dabei beispielhaft in einer Ruhelage gezeigt, in der das Anzeigeflächenelement 16 zumindest teilweise in einem Schacht 18 des Innenraumverkleidungselements 12 eingefahren sein kann, wobei zum Beispiel das obere Viertel oder das obere Drittel des Anzeigeflächenelements 16 herausragen und damit sichtbar sein kann. Wird die Anzeigevorrichtung 14 nicht gebraucht, so kann das Anzeigeflächenelement 16 zum Beispiel vollständig im Schacht 18 versenkt sein.

In einer Variante kann das Anzeigeflächenelement 16 in der Ausgangslage oder Einspannlage auf die Breite des Schachts 18 eingestellt sein. Zum Ausbreiten in der horizontalen, zweiten Verstellrichtung 28 kann dann zum Beispiel zunächst das Anzeigeflächenelement 16 komplett aus dem Schacht 18 herausgefahren werden, und danach kann das Umlenkelement 24 entlang der Kraftfahrzeugquerachse, also in die zweite Verstellrichtung 28, verstellt werden. Alternativ, wie hier in den Figuren gezeigt, kann der Schacht so breit sein, dass das Anzeigeflächenelement 16 in Bezug auf die Breite auch in der Panoramalage hineinpasst. Die Linien A und B heben dabei die Breite des Anzeigeflächenelements 16 in der Einspannlage hervor.

In der Ausgangslage, die auch als Einspannlage bezeichnet werden kann, kann eine von dem Benutzer sichtbare Breite auf die Breite des Schachts eingestellt oder geringer sein.

Das Anzeigeflächenelement 16 kann zum Beispiel ein Bildschirm mit organischen Leuchtdioden (OLEDs) sein. Geeignete, biegsame Displays sind dem Fachmann aus dem Stand der Technik bekannt. In der Aufsicht der Fig. 1 kann das Anzeigeflächenelement zum Beispiel fahrerseitig mit einem Einspannelement 20 verbunden sein, zum Beispiel auf dieses aufgeklebt, eingespannt oder eingeklemmt sein, wobei das Einspannelement 20 als Stab ausgestaltet und zum Beispiel über eine Führungsschiene (in der Fig. 1 nicht gezeigt) in die erste Verstellrichtung 22 bewegt werden kann, also entlang der Kraftfahrzeug-Hochachse. Hierzu kann das Einspannelement 20 zum Beispiel eine Klemme, ein Festlager, oder einen Mechanismus zum Einspannen des Anzeigeflächenelements 16 aufweisen. An dem Einspannelement 20 wird das Anzeigeflächenelement 16 festgehalten.

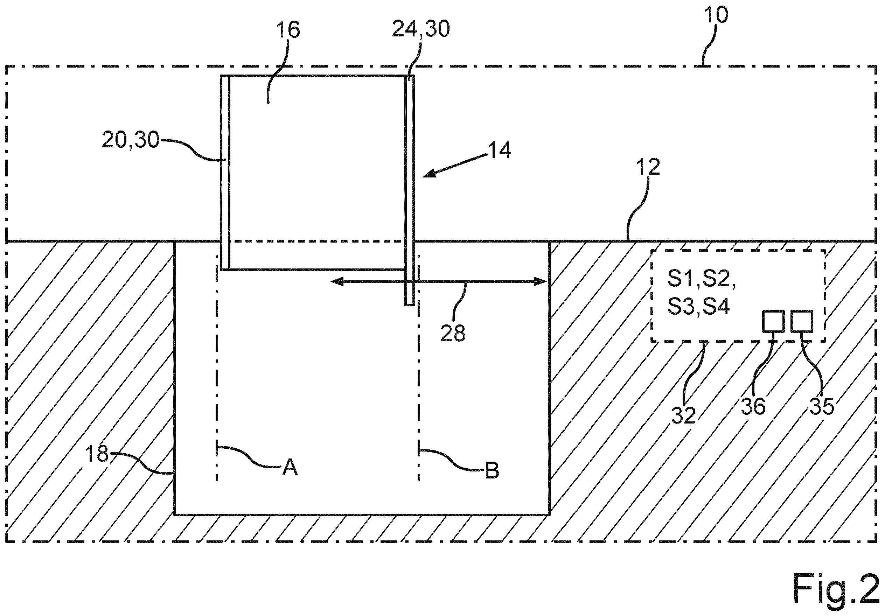

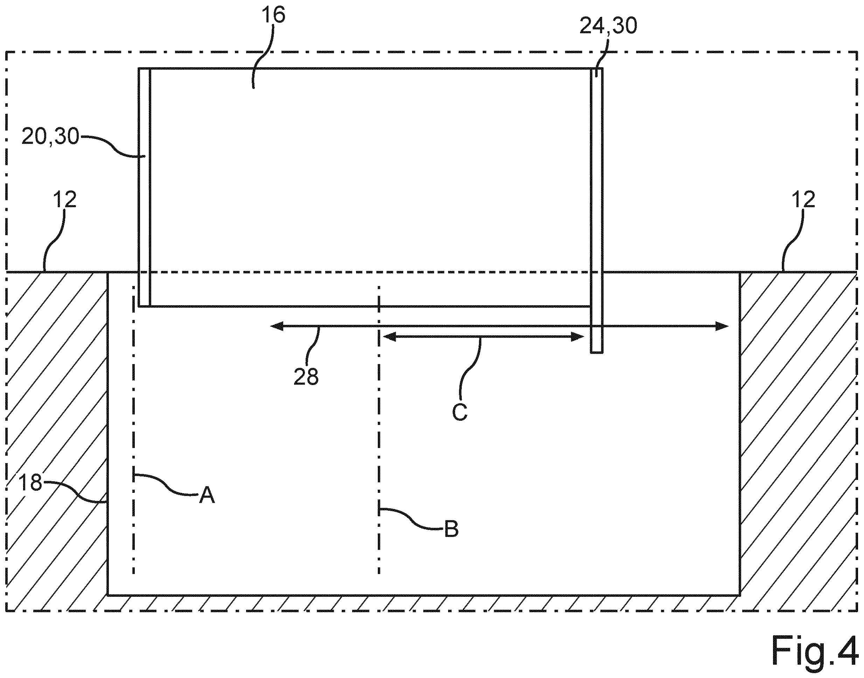

Das Anzeigeflächenelement 16 ist im Beispiel der Fig. 1 einmal um ein stabförmiges Umlenkelement 24 gebogen oder gewickelt, vorzugsweise nur einmal faltenlos um das Umlenkelement 24 gelegt. Das Umlenkelement 24 kann zum Beispiel ein Stab aus Metall oder Kunststoff sein, der vorzugsweise als Rolle mit zum Beispiel einem Radius von zehn Millimetern ausgestaltet sein kann. Die der am Einspannelement 20 festgehaltenen Seitenkante gegenüberliegende Seitenkante des Anzeigeflächenelements 16 ist mit dem Einspannelement 20 über ein Rückstellelement 26 verbunden. Aufgrund der besseren Übersichtlichkeit der Fig. 1 ist das Rückstellelement 26 in der Fig. 1 (sowie in der Fig. 2, und Fig. 4) nicht gezeigt.

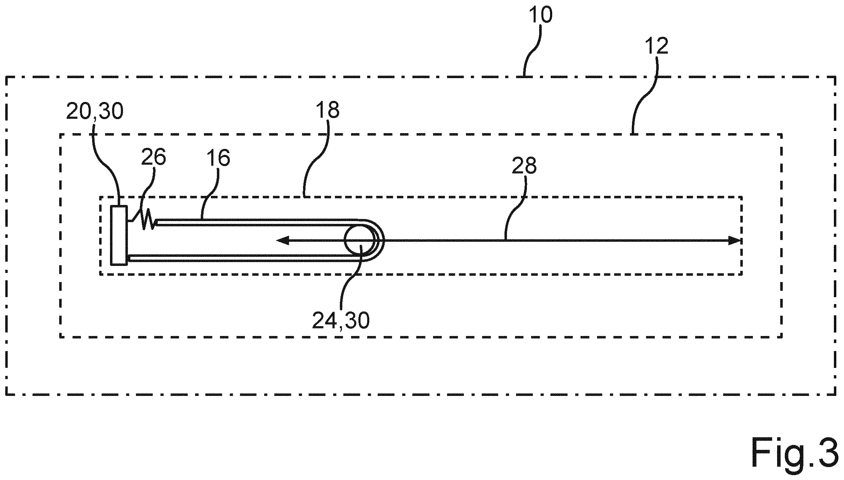

Zur Veranschaulichung der Anordnung der gegenüberliegenden Seitenkante am Einspannelement 20 zeigt die Fig. 3 eine Aufsicht, in der das Rückstellelement 26 zum Beispiel als Feder, Gummizug oder Faltenbalg ausgestaltet sein kann. Das Rückstellelement ist also ein nachgiebiges Element zum Spannen des Anzeigeflächenelements 16, das das Anzeigeflächenelement 16 unter Spannung hält. Das Rückstellelement 26 kann deswegen auch als "Federelement" bezeichnet werden.

Die Fig. 3 zeigt das flexible Anzeigeflächenelement 16 in seiner Vorspannung beziehungsweise Rückstellung, und den Verlauf der zweiten Verstellrichtung 28. Diese kann, wie in der Fig. 1 und in der Fig. 2 verdeutlicht, vorzugsweise senkrecht zu der ersten Verstellrichtung 22 verlaufen, also entlang einer Kraftfahrzeugbreite. In einer Variation der in den Figuren dargestellten Anzeigevorrichtung 14 kann die Anordnung des Einspannelements 20 und des Umlenkelements 24 auch gespiegelt sein, also zum Beispiel das Einspannelement 20 beifahrerseitig vom Anzeigeflächenelement 16 und das Umlenkelement 24 fahrerseitig davon angeordnet sein.

Das Einspannelement 20 und das Umlenkelement 24 können Bestandteil einer Verstelleinrichtung 30 sein. Zusammenfassend kann die Verstelleinrichtung 30 vorzugsweise zwei Linearantriebe aufweisen, in der mittels des Bewegens des Einspannelements 20 eine Höhe eingestellt wird, und durch Bewegen des Umlenkelements 24 ein Breite. In der Fig. 1 und in der Fig. 2 ist zunächst das Verfahren des Einspannelements 20 und damit das Einstellen der Höhe gezeigt. Optional kann beim Verfahren des Einspannelements 20 auch das Umlenkelement 24 mit nach oben geschoben werden.

Die Fig. 2 zeigt die Anzeigevorrichtung 14 zu einem Zeitpunkt, wo das Anzeigeflächenelement 16 schon weiter ausgefahren ist. Eine optionale Steuereinrichtung 32, zum Beispiel ein Steuergerät des Kraftfahrzeugs 10 oder ein Steuerchip der Anzeigevorrichtung 14, kann die Verstelleinrichtung 30 steuern. Hierzu ist schematisch eine Datenkommunikationsverbindung 34 gezeigt, die zum Beispiel eine drahtlose Datenkommunikationsverbindung sein kann, zum Beispiel eine WLAN-Verbindung, oder zum Beispiel ein Datenbus des Kraftfahrzeugs 10. Dabei ist die Datenkommunikationsverbindung 34 schematisch nur zum Umlenkelement 24 gezeigt, kann jedoch zum Beispiel mit einem zentralen Chip der Verstelleinrichtung 30 verbunden sein, der dann die Linearkinematik von Einspannelement 20 und Umlenkelement 24 steuern kann. Hierzu kann die Verstelleinrichtung 30 zum Beispiel einen Elektromotor aufweisen. Die optionale Steuereinrichtung 32 kann zum Beispiel eine Prozessoreinrichtung 35 aufweisen, und/oder einen Datenspeicher 36, auf dem zum Beispiel ein Programmcode zum Durchführen des erfindungsgemäßen Verfahrens abgespeichert sein kann.

Erfolgt die Einstellung des Anzeigeflächenelements 16 in Abhängigkeit von einem aktuellen Fahrmodus des Kraftfahrzeugs 10, so kann die Steuereinrichtung 32 ein entsprechendes Signal aus zum Beispiel einem Fahrerassistenzsystem des Kraftfahrzeugs 10 empfangen (Verfahrensschritt S1) und auswerten, und zum Beispiel beim Feststellen eines pilotierten Fahrmodus (S2) ein Steuersignal zum Betreiben der Kinematik erzeugen (S3). Das erzeugte Steuersignal kann die Steuereinrichtung 32 dann an die Verstelleinrichtung 30 übertragen (S4). In einem manuellen Fahrmodus kann dann zum Beispiel wieder die Ausgangslage eingestellt werden, in der das Anzeigeflächenelement 16 zum Beispiel zum Anzeigen von Fahrdaten, wie zum Beispiel einer Geschwindigkeit, einem Tachometerstand und einem Tankfüllstand, anzeigen kann (vgl. Fig. 1).

Die Fig. 4 zeigt einen Blick in das Cockpit, wobei sich das Anzeigeflächenelement 16 bereits in der Panoramalage befindet. Die Fig. 4 zeigt die Kinematik bei der Verbreiterung des Anzeigeflächenelements 16 in Richtung einer Y-Achse, also entlang einer Kraftfahrzeugquerachse beziehungsweise der zweiten Verstellrichtung 28, in die Panoramalage, die auch als Aufspannlage bezeichnet werden kann. Aus Gründen der besseren Übersichtlichkeit ist die Steuereinrichtung 32 in der Fig. 4 nicht gezeigt, kann jedoch in der Ausführung wie in der Fig. 1 und in der Fig. 2 gezeigt vorhanden sein. Doppelpfeil C zeigt die Verbreiterung im Vergleich zu der Ausgangslage (Einspannlage).

In der Panoramalage kann das Anzeigeflächenelement 16 zum Beispiel ein Breitenverhältnis von 16:9 haben. Durch die Kombination der Höhen- und Breitenverstellung kann dieses Format auch in der Ausgangslage beibehalten werden. Mit anderen Worten kann der sichtbare Bereich des Anzeigeflächenelements 16 dynamisch vergrößert und verkleinert werden.

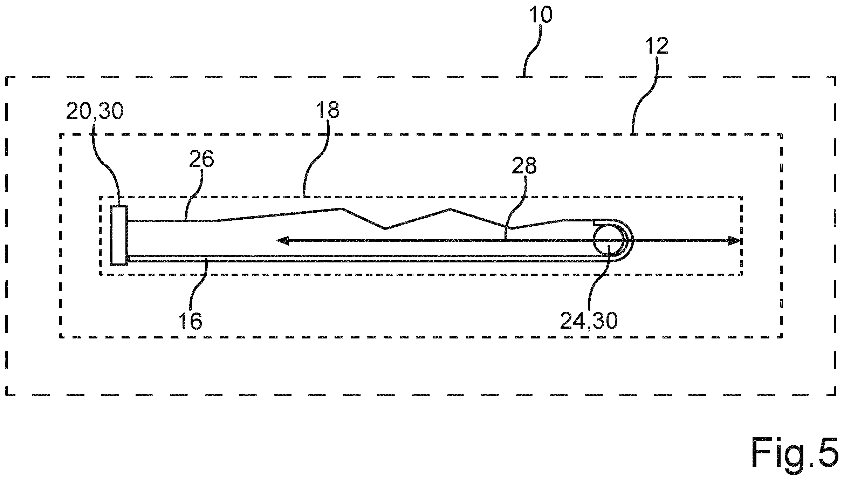

Die Fig. 5 veranschaulicht durch die Aufsicht, dass die linke Seite des Anzeigeflächenelements 16 beim Aufspannen fest am Einspannelement 20 bleibt, und bei zum Beispiel einem walzenartigen Bewegen des Umlenkelements 24 des Anzeigeflächenelements 16 aufgespannt und das Rückstellelement 26 in die Länge gezogen wird.

Das Anzeigeflächenelement 16 steht also unter höherer Spannung und wird, wird das Umlenkelement 24 wieder zum Einspannelement 20 hin verfahren, von dem Rückstellelement 26 zum Einspannelement 20 hin gezogen.

Insgesamt zeigen die Beispiele, wie durch die Erfindung ein vergrößerbares und/oder verkleinerbares Display bereitgestellt werden kann.

In einem weiteren Ausführungsbeispiel ist ein Einsatz eines Anzeigeflächenelements 16, zum Beispiel eines Displays, vorgesehen, das sich sowohl in der Höhe als auch in der Breite beliebig vergrößern und/oder verkleinern lässt. Dabei kommt zum Beispiel eine Ausfahrkinematik für die Vergrößerung in der Höhe und ein flexibles Display mit einer entsprechenden Kinematik und Rückstellung für die Verbreiterung zum Einsatz.

Das flexible beispielhafte Display ist einseitig zum Beispiel fest eingespannt und an demselben Einspannelement 20, zum Beispiel einem Einspannteil, kann mittels zum Beispiel einer Feder als Rückstellelement 26 die andere Seite des Display zum Beispiel eingehangen und gespannt werden.

Speziell für die Verbreiterung wird zum Beispiel eine einfache Umlenkrolle als Umlenkelement 24, ein Rückstellelement 26, zum Beispiel eine Rückstelleinheit, und die Flexibilität des beispielhaften Displays genutzt.

Dabei kann das System stufenlos bis zur maximalen Größe ein- und ausgefahren sowie verbreitert und jedes Format frei eingestellt werden.

Vorteilhaft ergibt sich auch, dass verschiedene Displaygrößen dargestellt werden können. Die eingesetzte Kinematik ist einfach.

## Patentansprüche

1. Anzeigevorrichtung (14), umfassend:
- ein flexibles Anzeigeflächenelement (16) mit einer Anzeigefläche zum Anzeigen eines Anzeigeinhalts, und
- eine Verstelleinrichtung (30), die ein in eine erste Verstellrichtung (22) beweglich angeordnetes, als Stab ausgestaltetes Einspannelement (20) und ein als Stab ausgestaltetes Umlenkelement (24) umfasst,
wobei eine erste Seitenkante des Anzeigeflächenelements (16) an der Länge des Einspannelements (20) angeordnet ist,
**dadurch gekennzeichnet, dass**
- die Verstelleinrichtung (30) ein am Einspannelement (20) angeordnetes Rückstellelement (26) umfasst, wobei eine der ersten Seitenkante gegenüberliegende zweite Seitenkante des Anzeigeflächenelements (16) über das Rückstellelement (26) mit dem Einspannelement (20) verbunden ist, sodass eine Fläche des Anzeigeflächenelements (16) gebogen ist und einen Beugungsbereich aufweist, und dass
- eine Länge des Umlenkelements (24) sich in die gleiche Richtung wie das Einspannelement (20) erstreckt, das Umlenkelement (24) sich innerhalb der Beugung des gebogenen Anzeigeflächenelements erstreckt und in eine zweite Verstellrichtung (28) beweglich angeordnet ist, um einen Abstand zwischen dem Umlenkelement (24) und dem Einspannelement (20) zu ändern.

2. Anzeigevorrichtung (14) nach Anspruch 1, wobei
die zweite Verstellrichtung (28) senkrecht zu der ersten Verstellrichtung (22) und/oder senkrecht zu der Erstreckung der Länge des Umlenkelements (24) verläuft.

3. Anzeigevorrichtung (14) nach einem der vorhergehenden Ansprüche, wobei das flexible Anzeigeflächenelement (16) nur einmal faltenlos um das Umlenkelement (24) gebogen ist.

4. Anzeigevorrichtung (14) nach einem der vorhergehenden Ansprüche, umfassend:
- eine Steuereinrichtung (32), die dazu ausgelegt ist, in Abhängigkeit von einem eingestellten Gebrauchsmodus ein Steuersignal zu erzeugen, das ein Verstellen des Einspannelements (20) in die erste Verstellrichtung (22) und ein Verstellen des Umlenkelements (24) in die zweite Verstellrichtung (28) beschreibt, vorzugsweise ein gleichzeitiges Verstellen von Einspannelement (20) und Umlenkelement (24).

5. Anzeigevorrichtung (14) nach Anspruch 4, wobei
das erzeugte Steuersignal einen Wechsel zwischen einer Ausgangslage des Anzeigeflächenelements (16) und einer Panoramalage, in der ein Abstand zwischen dem Umlenkelement (24) und dem Einspannelement (20) das Anzeigeflächenelement (16) größer ist als in der Ausgangslage, beschreibt.

6. Anzeigevorrichtung (14) nach Anspruch 4 oder 5, wobei
der eingestellte Gebrauchsmodus ein Fahrmodus eines Kraftfahrzeugs (10) ist.

7. Kraftfahrzeug (10), aufweisend eine Anzeigevorrichtung (14) nach einem der vorhergehenden Ansprüche.

8. Kraftfahrzeug (10) nach Anspruch 7, wobei das Anzeigeflächenelement (16) und die Verstelleinrichtung (30) in der Ausgangslage zumindest teilweise in einem Schacht (18) eines Innenraumverkleidungselements (12) angeordnet sind, sodass sich das Einspannelement (20) und das Umlenkelement (24) jeweils vertikal erstrecken; und wobei bei einem Wechsel zwischen der Ausgangslage und einer Panoramalage die Steuereinrichtung (32) die Verstelleinrichtung (30) dazu veranlasst, das Einspannelement (20) vertikal und das Umlenkelement (24) horizontal zu bewegen.

9. Verfahren zum Betreiben einer Anzeigevorrichtung (14) nach einem der Ansprüche 1 bis 6, wobei die Steuereinrichtung (32):
- einen eingestellten Gebrauchsmodus feststellt (S2), und
- in Abhängigkeit von einem eingestellten Gebrauchsmodus ein Steuersignal erzeugt (S3), das ein Verstellen des Einspannelements (20) in die erste Verstellrichtung (22) und ein Verstellen des Umlenkelements (24) in die zweite Verstellrichtung (28) beschreibt; vorzugsweise ein gleichzeitiges Verstellen von Einspannelement (20) und Umlenkelement (24).

10. Verfahren nach Anspruch 9, zum Betreiben einer Anzeigevorrichtung (14) eines Kraftfahrzeugs (10) nach einem der Ansprüche 7 oder 8, und wobei der eingestellte Gebrauchsmodus ein eingestellter Fahrmodus ist; vorzugsweise wobei die Steuereinrichtung (32) in einem pilotierten Fahrmodus die Panoramalage des Anzeigeflächenelements (16) einstellt.

## Claims

1. A display device (14), comprising:
- a flexible display surface element (16) with a display surface for displaying a display content, and
- an adjusting device (30), which includes a clamping element (20) configured as a rod, arranged movable into a first adjusting direction (22), and a deflecting element (24) configured as a rod,
wherein a first lateral edge of the display surface element (16) is arranged on the length of the clamping element (20),
**characterized in that**
- the adjusting device (30) includes a return element (26) arranged on the clamping element (20), wherein a second lateral edge of the display surface element (16) opposing the first lateral edge is connected to the clamping element (20) via the return element (26) such that a surface of the display surface element (16) is bent and comprises a bending area, and that
- a length of the deflecting element (24) extends in the same direction as the clamping element (20), the deflecting element (24) extends within the bend of the bent display surface element and is arranged movable into a second adjusting direction (28), to change a distance between the deflecting element (24) and the clamping element (20).

2. The display device (14) according to claim 1, wherein
the second adjusting direction (28) extends perpendicularly to the first adjusting direction (22) and/or perpendicularly to the extension of the length of the deflecting element (24).

3. The display device (14) according to any one of the preceding claims, wherein the flexible display surface element (16) is only once bent around the deflecting element (24) without wrinkles.

4. The display device (14) according to any one of the preceding claims, comprising:
- a control device (32), which is adapted to generate a control signal depending on an adjusted use mode, which describes an adjustment of the clamping element (20) into the first adjusting direction (22) and an adjustment of the deflecting element (24) into the second adjusting direction (28), preferably a simultaneous adjustment of clamping element (20) and deflecting element (24).

5. The display device (14) according to claim 4, wherein
the generated control signal describes a change between an initial position of the display surface element (16) and a panorama position, in which a distance between the deflecting element (24) and the clamping element (20) of the display surface element (16) is greater than in the initial position.

6. The display device (14) according to claim 4 or 5, wherein
the adjusted use mode is a drive mode of the motor vehicle (10).

7. A motor vehicle (10), comprising a display device (14) according to any one of the preceding claims.

8. The motor vehicle (10) according to claim 7, wherein the display surface element (16) and the adjusting device (30) are at least partially arranged in a duct (18) of an interior trim element (12) in the initial position, such that the clamping element (20) and the deflecting element (24) each vertically extend; and wherein upon a change between the initial position and a panorama position, the control device (32) causes the adjusting device (30) to vertically move the clamping element (20) and to horizontally move the deflecting element (24).

9. A method for operating a display device (14) according to any one of claims 1 to 6, wherein the control device (32):
- determines an adjusted use mode (S2), and
- generates (S3) a control signal depending on an adjusted use mode, which describes an adjustment of the clamping element (20) into the first adjusting direction (22) and an adjustment of the deflecting element (24) into the second adjusting direction (28); preferably a simultaneous adjustment of clamping element (20) and deflecting element (24).

10. The method according to claim 9 for operating a display device (14) of a motor vehicle (10) according to any one of claims 7 or 8, and wherein the adjusted use mode is an adjusted drive mode; wherein the control device (32) preferably adjusts the panorama position of the display surface element (16) in a piloted drive mode.

## Revendications

1. Dispositif d'affichage (14), comprenant :
- un élément de surface d'affichage souple (16) ayant une surface d'affichage pour afficher un contenu d'affichage, et
- un dispositif de réglage (30) comprenant un élément de serrage (20) configuré sous la forme d'une tige, agencé de manière mobile dans une première direction de réglage (22), et un élément de déviation (24) configuré sous la forme d'une tige,
un premier bord latéral de l'élément de surface d'affichage (16) étant agencé sur la longueur de l'élément de serrage (20),
**caractérisé en ce que**
- le dispositif de réglage (30) comprend un élément de rappel (26) agencé sur l'élément de serrage (20), un second bord latéral de l'élément de surface d'affichage (16) opposé au premier bord latéral étant relié à l'élément de serrage (20) par l'intermédiaire de l'élément de rappel (26), de sorte qu'une surface de l'élément de surface d'affichage (16) est incurvée et comporte une zone de flexion, et **en ce que**
- une longueur de l'élément de déviation (24) s'étend dans la même direction que l'élément de serrage (20), l'élément de déviation (24) s'étend à l'intérieur de la zone de flexion de l'élément de surface d'affichage incurvé et est agencé de manière mobile dans une seconde direction de réglage (28) afin de changer la distance entre l'élément de déviation (24) et l'élément de serrage (20).

2. Dispositif d'affichage (14) selon la revendication 1,
dans lequel la seconde direction de réglage (28) est perpendiculaire à la première direction de réglage (22) et/ou perpendiculaire à l'extension de la longueur de l'élément de déviation (24).

3. Dispositif d'affichage (14) selon l'une des revendications précédentes, dans lequel l'élément de surface d'affichage souple (16) est incurvé une seule fois de manière lisse autour de l'élément de déviation (24).

4. Dispositif d'affichage (14) selon l'une des revendications précédentes, comprenant :
- un dispositif de commande (32) conçu pour générer un signal de commande en fonction d'un mode d'utilisation réglé, lequel signal décrit un réglage de l'élément de serrage (20) dans la première direction de réglage (22) et un réglage de l'élément de déviation (24) dans la seconde direction de réglage (28), de préférence un réglage simultané de l'élément de serrage (20) et de l'élément de déviation (24).

5. Dispositif d'affichage (14) selon la revendication 4,
dans lequel le signal de commande généré décrit un changement entre une position initiale de l'élément de surface d'affichage (16) et une position panoramique dans laquelle une distance entre l'élément de déviation (24) et l'élément de serrage (20) de l'élément de surface d'affichage (16) est plus grande que dans la position initiale.

6. Dispositif d'affichage (14) selon la revendication 4 ou 5,
dans lequel le mode d'utilisation réglé est un mode de conduite d'un véhicule à moteur (10).

7. Véhicule à moteur (10), comportant un dispositif d'affichage (14) selon l'une des revendications précédentes.

8. Véhicule à moteur (10) selon la revendication 7, dans lequel l'élément de surface d'affichage (16) et le dispositif de réglage (30) dans la position initiale sont agencés au moins partiellement dans un évidement (18) d'un élément de garniture intérieure (12), de sorte que l'élément de serrage (20) et l'élément de déviation (24) s'étendent respectivement verticalement ; et dans lequel en cas de changement entre la position initiale et une position panoramique, le dispositif de commande (32) amène le dispositif de réglage (30) à déplacer verticalement l'élément de serrage (20) et à déplacer horizontalement l'élément de déviation (24).

9. Procédé pour faire fonctionner un dispositif d'affichage (14) selon l'une des revendications 1 à 6, dans lequel le dispositif de commande (32) :
- établit un mode d'utilisation réglé (S2), et
- en fonction d'un mode d'utilisation réglé, génère (S3) un signal de commande (S3) qui décrit un réglage de l'élément de serrage (20) dans la première direction de réglage (22) et un réglage de l'élément de déviation (24) dans la seconde direction de réglage (28) ; de préférence un réglage simultané de l'élément de serrage (20) et de l'élément de déviation (24).

10. Procédé selon la revendication 9 pour faire fonctionner un dispositif d'affichage (14) d'un véhicule à moteur (10) selon l'une des revendications 7 ou 8, et dans lequel le mode d'utilisation réglé est un mode de conduite réglé ; le dispositif de commande (32) réglant de préférence la position panoramique de l'élément de surface d'affichage (16) dans un mode de conduite piloté.
